# EUROPEAN PATENT SPECIFICATION

(11) **EP 4 160 197 B1**
(45) Date of publication and mention of the grant of the patent: **19.03.2025**
(21) Application number: 22198497.4
(22) Date of filing: 28.09.2022
(51) Int. Cl.: G01N 25/72

(54) **THERMOGRAPHIC INSPECTION APPARATUS AND METHOD**
THERMOGRAFISCHE PRÜFVORRICHTUNG UND VERFAHREN
APPAREIL D'ESSAI THERMOGRAPHIQUE ET PROCÉDÉ

(30) Priority: 30.09.2021 JP 2021162288
(43) Date of publication of application: 05.04.2023
(73) Proprietor: Ricoh Company, Ltd., Tokyo 143-8555 (JP)
(72) Inventor: Masuda, Koji, Tokyo 143-8555 (JP); Inoue, Yuta, Tokyo 143-8555 (JP); Hirayama, Rie, Tokyo 143-8555 (JP)
(74) Representative: Marks & Clerk LLP

(56) References cited:
- WO-A2-2015/140797
- JP-A- 2017 067 549
- JP-A- 2020 041 840
- US-A1- 2005 286 606
- CRUZ SAMUEL ET AL: "Real-Time Quality Control of Heat Sealed Bottles Using Thermal Images and Artificial Neural Network", JOURNAL OF IMAGING, vol. 7, no. 2, 3 February 2021 (2021-02-03), pages 24, XP093019749, DOI: 10.3390/jimaging7020024

## Description

### BACKGROUND

### Technical Field

Embodiments of the present disclosure relates to an inspection apparatus and an inspection method.

### Related Art

An inspection apparatus for inspecting a sealing portion of a package including a content such as food is known. The content is packed inside the package by sealing the sealing portion of the package. Specifically, the inspection apparatus checks whether the sealing portion is correctly sealed or not. In other words, the inspection apparatus performs a pass-or-fail determination for the package.

In Japanese Unexamined Patent Application Publication No. 2017-083403, an inspection apparatus for the package is disclosed. The inspection apparatus emits light to the package all the time during inspection, detects the package when the package reaches the predetermined position of the inspection apparatus, and acquires an image of the package after a predetermined time.

In addition to the pass-or-fail determination, the inspection apparatus may accurately discriminate a type of defects from the other types of defects when the package fails. A manufacturer or an inspector of the package can take measures against the fundamental cause of the defect and eliminate the defect.

In view of the above circumstances, embodiments of the present invention aim at providing an inspection apparatus and an inspection method that determine whether the package is pass or fail and discriminate a certain type of defects of the package from the other types of defects when the package is fail without additional time to determine (identify) a type of defects.

US-A-2005/286606 discloses an apparatus for monitoring and detecting thermal sealing defects includes a thermal imager, a controller, and an output device.

"Real-Time Quality Control of Heat Sealed Bottles Using Thermal Images and Artificial Neural Network" by CRUZ SAMUEL ET AL discloses a case study where an automated non-invasive and non-destructive quality control system was designed to assess the quality of the seals of bottles containing pesticide. In this case study, the integrity of the seals is evaluated using an artificial neural network based on images of the seals processed with computer vision techniques.

JP-A-2017067549 discloses a light source unit that is configured to alternately and repetitively irradiate an object under inspection with light from a region of a light-emitting region and light from the region and other regions thereof at an interval of a frame acquisition period of a line sensor. The line sensor 4 is configured to receive light emitted from the light source unit and transmitted through the object under inspection in synchronization with irradiation timing of the light source unit, and generate a detection signal based on a volume of transmission of received light. Linear light source images and surface light source images are separately generated from detection information that is based on the detection signal from the line sensor to obtain two kinds of transmission images, which are used to identify a seal area of a seal section of the object under inspection and determine the presence or absence of anomaly in the seal area.

### SUMMARY

According to embodiments of the present invention, the inspection apparatus and the inspection method determine whether the sealing portion of the package is pass or fail and discriminate between types of defects of the package without additional time to discriminate between the types of the defect. The invention is set out in the appended set of claims.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a diagram of a configuration of an inspection apparatus according to an embodiment:
FIG. 2 is a diagram of a package to be inspected by the inspection apparatus;
FIG. 3 is a diagram of a configuration of the package material;
FIG. 4 is a block diagram of a hardware configuration of the controller device;
FIG. 5 is a functional block diagram of the functions of the controller device;
FIG. 6 is a graph of the absorbance of aluminum included in the package of FIG. 2;
FIG. 7 is a diagram of a configuration of a light receiving unit;
FIG. 8 is a timing chart of a typical sequential readout of a light receiving unit;
FIG. 9 is a timing chart of a sequential readout of a light receiving unit as comparative example;
FIG. 10 is a timing chart of a sequential readout in which the light emitting unit emits light during the exposure times of the lines of the non-limited region of the light receiving unit;
FIG. 11 is another timing chart of a sequential readout in which the light emitting unit emits light during the exposure times of the lines of the non-limited region of the light receiving unit ;
FIG. 12 is a timing chart in which the light emitting unit 31 emits light for a certain period of time;
FIG. 13 is another timing chart in which the light emitting unit emits light for a certain period of time;
FIG. 14 is a diagram of a point light source to emit light on the package being stopped;
FIG. 15 is a diagram of a line light source to emit light on the package being stopped;
FIG. 16 is a diagram of an area light source to emit light on the package being stopped;
FIG. 17 is a diagram of an area light receiving element to receive thermal radiation from the package being stopped;
FIG. 18 is a diagram of a first layout of the light emitting unit and the light receiving unit;
FIG. 19 is a diagram of a second layout of the light emitting unit and the light receiving unit;
FIG. 20 is a diagram of a third layout of the light emitting unit and the light receiving unit;
FIG. 21 is a tree diagram of classification of defects of packages;
FIG. 22 is a tree diagram of classification of defects of the sealing portion;
FIG. 23 is a graph of change in surface temperature between a position in a normal state and a position in an anomaly state;
FIG. 24 is a two-dimensional image related to determination of pass-or-fail for the sealing portion.
FIG. 25 is a tree diagram of a relation between modules, image processing algorithms, and defects;
FIG. 26 is another tree diagram of a relation between modules, image processing algorithms, and defects;
FIG. 27A is a timing chart of light emission; FIG. 27B is a timing chart of light reception; and
FIG. 28 is a diagram of an example of a determination result display screen.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, embodiments of an inspection apparatus and an inspection method will be described in detail with reference to the accompanying drawings.

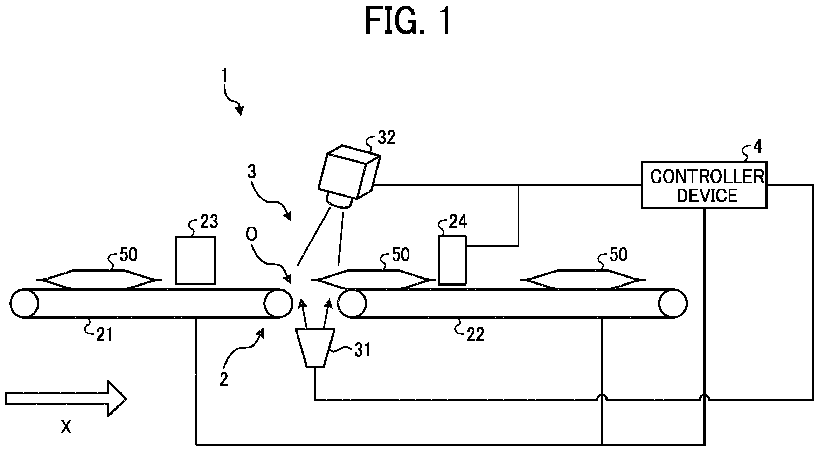

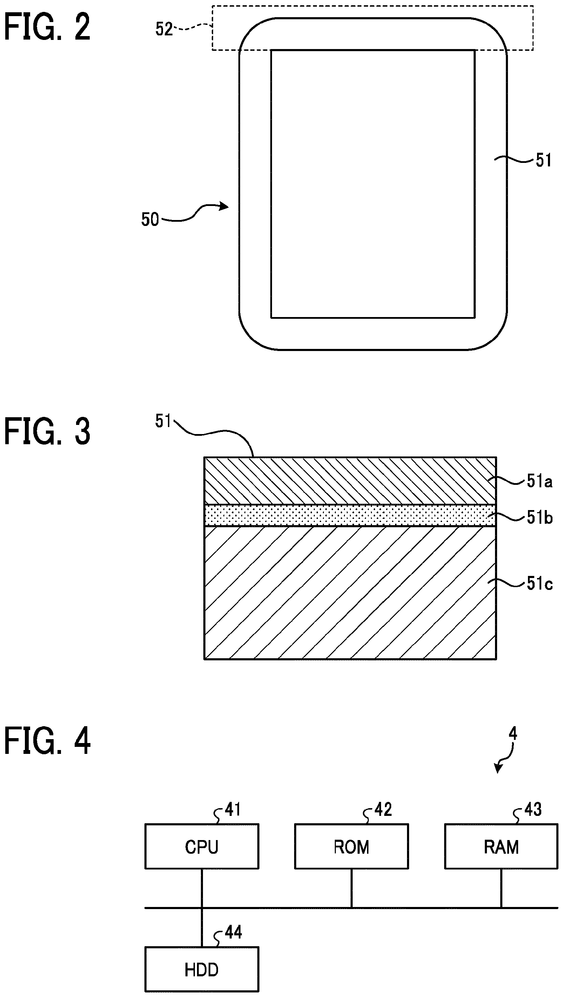

FIG. 1 is a diagram of a configuration example of the inspection apparatus 1 according to the embodiment, and FIG. 2 is a diagram of an example of a package 50 inspected by the inspection apparatus 1. The inspection apparatus 1 checks whether the package 50 is properly sealed or not, and rejects the package 50 found to be an anomaly from the production line.

The package 50 will be described. As illustrated in FIG. 2, the package 50, which is a bag-shaped package material 51, contains , e.g., food such as curry or soup (the contents of the package 50). In the package 50 in FIG. 2, the bag-shaped opening is sealed by bonding the packaging materials 51 to each other.

For the package material 51 of the package 50, a single-layer plastic film, a single-layer plastic film having a surface treatment, or a plastic film laminated with multiple single-layer films is used. Examples of the surface treatment include coating for adding moisture proof or vapor deposition of aluminum, silica, or alumina for adding gas barrier properties.

Further, as the package material 51 of the package 50, a film laminated with an aluminum foil 51b (FIG. 3) on the plastic film described above is used. The package material 51 laminated with the aluminum foil 51b is used in applications involving higher gas barrier properties and moisture proof properties. In particular, the package material 51 laminated with an aluminum foil 51b is a packaging container for pre-packaged food, retort food, a sealed pouch, or a retort pouch.

FIG. 3 is a diagram of a configuration example of the packaging material 51. A packaging material 51 illustrated in FIG. 3 is a configuration example of the packaging material 51 for a retort pouch. In the package material 51 in FIG. 3, a polyester film 51a, an aluminum foil 51b, and a non-oriented polypropylene (CPP) film 51c are laminated in this order from the surface of the package material 51. A film laminated with an aluminum foil or an aluminum deposition film as in the package material 51 in FIG. 3 has poor visual transparency, and a content packed inside the package material 51 is visually hard to be seen.

The package 50 illustrated in FIG. 2 has a bag-shaped opening in which the package materials 51 are facing each other. The bag-shaped opening is sealed by bonding the packaging materials 51 to each other, which is referred to a sealing portion 52. The sealing portion 52 is bonded by heat sealing in which a heated bar is pressed against a portion to be sealed, that is, thermocompression bonding or an ultrasonic sealing in which a portion to be sealed is melted and bonded by ultrasonic vibration and pressurization.

Herein, a manufacturing process of the package 50 will be briefly described. The package 50 is manufactured by filling contents (e.g., food such as curry or soup) into a package material 51, which is bag-shaped, by a filling means (e.g., filling machine) and sealing the sealing portion 52 of the package material 51.

In such a manufacturing process, the inspection apparatus 1 inspects the package 50 sealed at the sealing portion 52 in order to make sure that the package 50 is tightly sealed and the content does not leak (i.e., seal inspection). In the seal inspection, the inspection apparatus 1 determines whether the sealing portion 52 has a normal state or an anomaly state (i.e., defect). The anomaly state is, for example, trapping, pinhole, through-hole, wrinkle, and tunnel. Specifically, the trapping is a defect in which the contents are trapped in the sealing portion 52, the pinhole or the through-hole is a defect in which a hole is formed in the sealing portion 52, the wrinkle is a defect in which a crease appears when the sealing portion 52 is folded or crushed, and the tunnel is a defect in which a passage through which the contents may leak to the outside is formed in the sealing portion 52.

The inspection apparatus 1 will be described in detail. As illustrated in FIG. 1, the inspection apparatus 1 includes a conveyor unit 2, an image acquisition device 3, and a controller device 4.

The image acquisition device 3 includes a light emitting unit 31 (light emitter) disposed below the conveyor unit 2 and a light receiving unit 32 (light receiver) disposed above the conveyor unit 2.

The conveyor unit 2 includes a first conveyor part 21 and a second conveyor part 22. The first conveyor part 21 and the second conveyor part 22 convey the package 50 on an endless belt by rotationally driving the endless belt. The first conveyor part 21 is disposed on the upstream side in the conveying direction X of the package 50 with respect to the arrangement position of the image acquisition device 3. The second conveyor part 22 is disposed on the downstream side in the conveying direction X of the package 50 with respect to the arrangement position of the image acquisition device3. The conveyor unit 2 has a gap O between the first conveyor part 21 and the second conveyor part 22. The gap O is also a space between the light emitting unit 31 and the light receiving unit 32. The distance, which is the gap O, between the first conveyor part 21 and the second conveyor part 22 is a distance that does not affect the conveyance of the package 50 from the first conveyor part 21 to the second conveyor part 22. Since the conveyor unit 2 has the configuration described above, the conveyor unit 2 conveys the package 50 through the space between the light emitting unit 31 and the light receiving unit 32.

The image acquisition device 3 acquires two-dimensional thermal information on the sealing portion 52 of the package 50 conveyed by the conveyor unit 2 as an image.

The light emitting unit 31 two-dimensionally emits light to the entire sealing portion 52 of the package 50 conveyed by the conveyor unit 2. The light emitting unit 31 may emit light to the package 50 being conveyed by the conveyor unit 2 at the gap O between the first conveyor part 21 and the second conveyor part 22 or may emit light to the package 50 temporarily being stopped on the conveyor unit 2.

The light receiving unit 32 two-dimensionally receives thermal radiation from the entire sealing portion 52 of the package 50. The thermal radiation is caused by the light emitting unit 31's emitting light to the sealing portion 52.

The controller device 4 will be described. The controller device 4 entirely controls the inspection apparatus 1. FIG. 4 is a block diagram of a hardware of the controller device 4. As illustrated in FIG. 4, the controller device 4 includes a central processing unit (CPU) 41, a read only memory (ROM) 42, a random access memory (RAM) 43, and a hard disk drive 44 (HDD). The controller device 4 controls each unit of the conveyor unit 2 and the image acquisition device 3 to drive using the RAM 43 as a working memory in accordance with a program stored in the RAM 43 or the HDD 44 in advance. As the controller device 4, for example, a personal computer (e.g., desktop, notebook computer or laptop computer) can be used.

The program executed by the controller device 4 according to the present embodiment may be provided by recorded in a computer-readable recording medium such as a compact disc read-only memory (CD-ROM), a flexible disk (FD), a compact disc recordable (CD-R), and a digital versatile disc (DVD) as a file of an installable format or an executable format.

Further, the program executed by the controller device 4 according to the present embodiment may be stored in a computer connected to a network such as the Internet and provided by downloaded through the network. The program executed by the controller device 4 according to the present embodiment may be provided or distributed through a network such as the Internet.

The controller device 4 determines whether the sealing portion 52 of the package 50 is in a normal state or an anomaly state (i.e., defect) based on the two-dimensional image acquired by the image acquisition device 3.

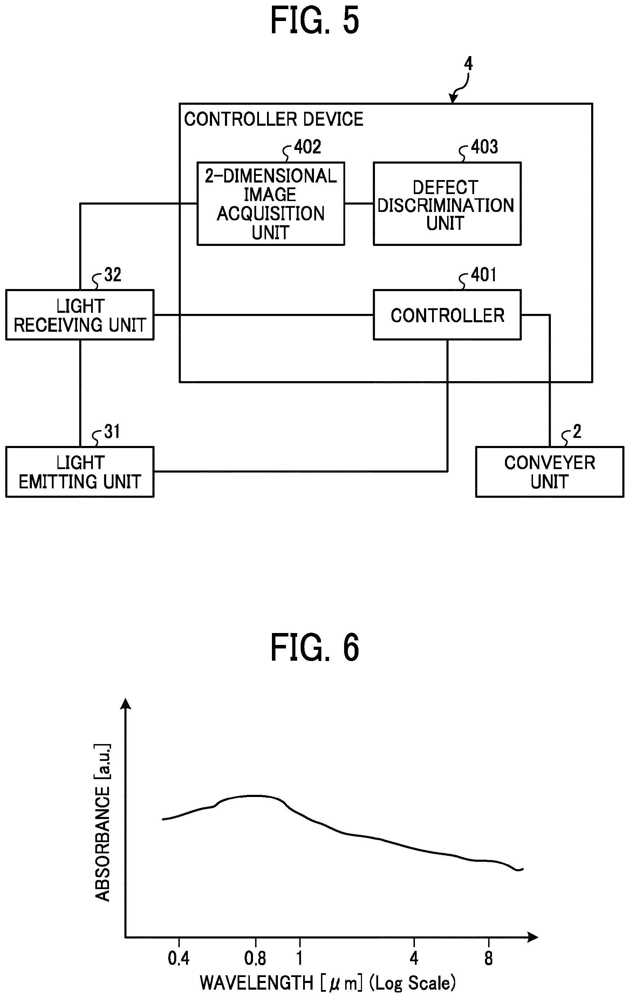

The function of the controller device 4 will be described. FIG. 5 is a functional block diagram of the controller device 4. As illustrated in FIG. 5, when the CPU 41 works in accordance with the program, the controller device 4 works as a controller 401, a two-dimensional image acquisition unit 402, and a defect discrimination unit 403.

The controller 401 controls light emission of the light emitting unit 31 and light reception of the light receiving unit 32 of the image acquisition device 3. The controller 401 controls the first conveyor part 21 and the second conveyor part 22 of the conveyor unit 2 to drive.

The two-dimensional image acquisition unit 402 acquires two-dimensional thermal information on the sealing portion 52 of the package 50 from thermal radiation information two-dimensionally received by the light receiving unit 32 as an image. The two-dimensional image acquisition unit 402 converts the light information into the thermal information and acquires a thermal image. The two-dimensional image acquisition unit 402 is also referred to as thermography (thermal image). The two-dimensional image acquisition unit 402 may be provided in an infrared camera in which the light receiving unit 32 is an uncooled microbolometer.

The light emitting unit 31 and the light receiving unit 32 will be described in detail. As described above, the aluminum vapor deposition film or a film laminated with an aluminum foil is used in the package material 51 of the package 50, and at least aluminum is included in the package material 51 of the package 50. Thus, the light emitting unit 31 of the inspection apparatus 1 according to the present embodiment emits light to one side of the sealing portion 52 of the package 50, in which the light has a wavelength that at least aluminum absorbs. The aluminum foil 51b (FIG. 3) of the package material 51 absorbs the light emitted from the light emitting unit 31 and converts optical energy of the light into thermal energy. Heat generated in the aluminum foil 51b of the package material 51 is conducted between the surfaces of each layer and through each layer and reaches the surface of the package material 51. The package material 51 radiates light due to thermal radiation from the surface. The light radiation is emitted as a spectrum based on the Planck's law and is received by the light receiving unit 32. The light receiving unit 32 two-dimensionally receives information on the thermal radiation.

FIG. 6 is a graph of the absorptance of aluminum; Aluminum has an absorbance spectrum illustrated in FIG. 6. As illustrated in FIG. 6, aluminum effectively absorbs light at the peak of the absorbance of near infrared light of 0.78 µm to 1.0 µm in wavelength. In addition, aluminum has a high absorbance for ultraviolet light (0.38 µm or shorter in wavelength) and visible light (0.38 µm to 0.78 µm in wavelength). The absorbance of aluminum decreases at a wavelength of 1 µm or longer. Preferably, the light emitting unit 31 emits at least one of ultraviolet light, visible light, or near infrared light. A halogen lamp capable of emitting light including at least ultraviolet light, visible light, or near infrared light can be applied to the light emitting unit 31 of the present embodiment. In general, a halogen lamp can emit light having a wavelength longer than a wavelength of visible light and has a very broad emission spectrum. Depending on the temperature of the halogen lamp, the halogen lamp includes a large amount of light (e.g., 50% or larger) having a wavelength longer than a wavelength of the near infrared light.

The light emitting unit 31 is not limited to a halogen lamp, and a xenon lamp capable of emitting ultraviolet light, visible light, or near infrared light may be applied. In general, the xenon lamp has a broad emission spectrum over ultraviolet light, visible light, and near infrared light, and has multiple sharp emission spectra in the near infrared light. The xenon lamp includes little light having a wavelength longer than near infrared (e.g., 5% or smaller). Such light having a wavelength longer than the wavelength of the near infrared light is also referred to as a heat ray and heats surrounding members, which affects downsizing of the apparatus and selection of components. Preferably, the light emitting unit 31 excludes light having a wavelength longer than near infrared wavelengths.

A near infrared light emitting diode (LED) or a near infrared laser having a peak wavelength in a near infrared wavelengths may be applied to the light emitting unit 31. Since the peak wavelength of the emission spectrum of the near infrared light emitting diode or the near infrared laser is substantially the same as the peak wavelength of the absorption spectrum of aluminum, light energy can be converted into thermal energy with high efficiency. The near infrared LED or the near infrared laser generally has a longer life than a life of a halogen lamp or a xenon lamp and has an advantage in a longer replacement cycle when used in the inspection apparatus 1 that continuously operates.

The light emitting unit 31 may be continuously turned on (i.e., direct current (DC) light emission) or intermittently turned on (i.e., pulse light emission). However, in terms of life, preferably, the light emitting unit 31 can be intermittently turned on at about 1 Hz to 2 Hz. Specifically, the light emitting unit 31 is a laser, an LED, or a xenon lamp.

When continuously turned on (i.e., DC light emission), the light emitting unit 31 may be provided with an intermittent emission means (e.g., shutter) between the light emitting unit 31 and the package 50 so as to intermittently emit light to the package 50.

In the present embodiment, an increase in the surface temperature of the sealing portion 52 may be about several degrees of Celsius to 10°C. Depending on the cost of light source and size, a high-power light source may be used to further raise temperature. When the ambient temperature around the inspection apparatus 1 is about 20°C to 30°C, the surface temperature of the seal portion is about 295K to 315K in absolute temperature. (0°C is 273K. When the ambient temperature is about 20°C to 30°C, it is about 293K to 303K. In consideration of the surface temperature of the sealing portion, it is about 295K to 315K) According to the Planck's law, the thermal radiation corresponding to 300K has wavelengths of about 3 µm or longer. Thus, the light emitted from the sealing portion 52 of the package 50 caused by thermal radiation has a wavelength of about 3 µm or longer according to the Planck's law. Thus, the light receiving unit 32 receives the light having a wavelength of 3 µm or longer.

As described above, since the wavelength of the light emitted from the light emitting unit 31 and the wavelength of the thermal radiation received by the light receiving unit 32 are different from each other (i.e., wavelength difference), the light receiving unit 32 does not receive the light emitted from the light emitting unit 31. Thus, the wavelength difference does not generate noise to the light receiving unit 32, and the light receiving unit 32 receives a signal having a higher quality.

In the transmission spectrum of the atmosphere, there are wavelength bands referred to as an atmospheric window in which the transmittance of the atmosphere is higher. When the inspection is performed in the atmosphere, it is preferable to use such wavelength bands. The wavelength bands are, for example, middle wavelength infrared radiation (MWIR) having a wavelength band of 3 to 6 µm and long wavelength infrared radiation (LWIR) having a wavelength band of 8 to 14 µm.

In addition, since the thermal radiation spectrum of about 300K has a peak at about 10 µm in wavelength, it is preferable to use the atmospheric window of LWIR in order to achieve a higher sensitive measurement.

Thus, in the present embodiment, an infrared light receiving element that receives the LWIR is used as the light receiving unit 32. The infrared light receiving element includes a cooling infrared light receiving element cooled to extremely low temperature to achieve higher sensitivity and an uncooled infrared light receiving element operable at room temperature. In the present embodiment, the uncooled infrared light receiving element is used as the light receiving unit 32 because it is practically low cost.

The light emitting unit 31 may be a point light source, a line light source, or an area light source as long as these light sources two-dimensionally emits light to the entire sealing portion 52.

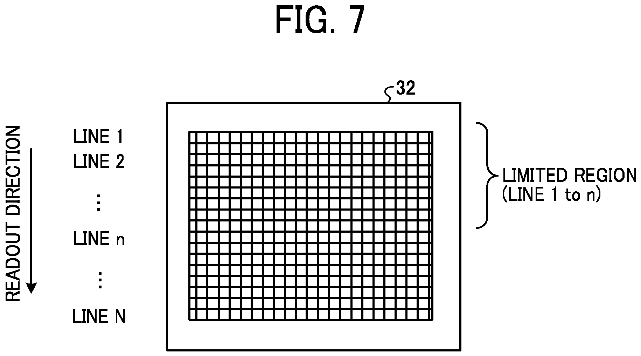

The light emitting unit 31 and the light receiving unit 32 will be described in detail. As described above, the light receiving unit 32 is an area light receiving element that receives thermal radiation from the entire sealing portion 52 due to the light emission to the sealing portion 52. FIG. 7 is a diagram of a configuration of the light receiving unit 32. As illustrated in FIG. 7, the light receiving unit 32 has a rectangular shape and includes a large number of pixels. In the light receiving unit 32, a readout direction in which a signal is output from each pixel is the direction of the shorter side of the rectangular shape (i.e., a direction in which the number of pixels is small). A row of pixels arranged in a direction orthogonal to the readout direction is referred to as a line.

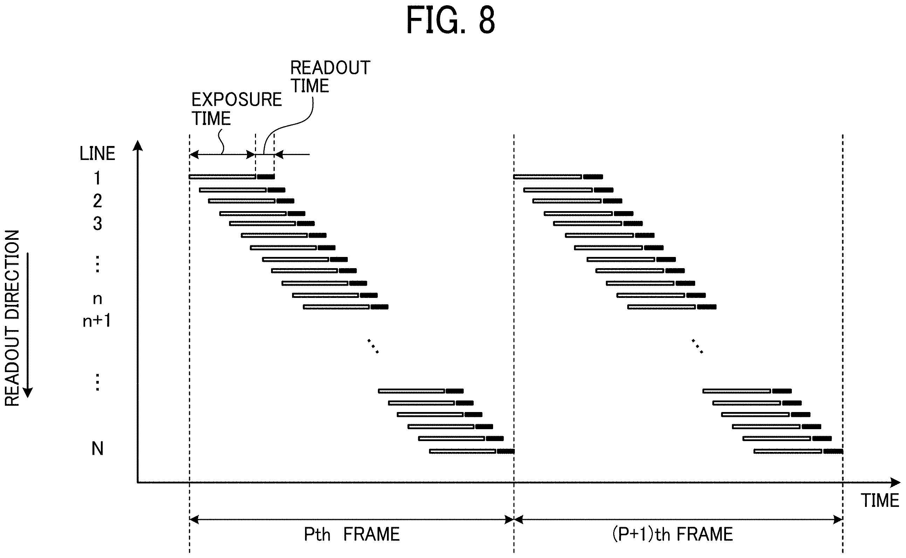

FIG. 8 is a timing chart of a typical sequential readout of the light receiving unit. The light receiving unit 32 is an area light receiving unit such as a complementary metal-oxide-semiconductor (CMOS) image sensor. Typically, the CMOS readout circuitry is built in the light receiving unit 32. Herein, a typical sequential readout will be briefly described. However, the readout is not limited to the description below.

In the timing chart illustrated in FIG. 8, the vertical axis represents each line where the readout direction is from the first line to Nth line (i.e., line 1 to line N). The horizontal axis represents time, which is divided by frames. Each line includes an exposure time and an readout time which have predetermined periods. Herein, the exposure time is a period of time for charge accumulation in the pixel, when light is emitted to the pixel. As illustrated in FIG. 8, each line has a delay (time lag) in starting the exposure time within the Pth frame. Each exposure time sequentially starts from the 1st line to the Nth line. After the readout time of the Nth line in Pth frame is finished, the exposure time of the 1st line in the (P+1)th frame starts.

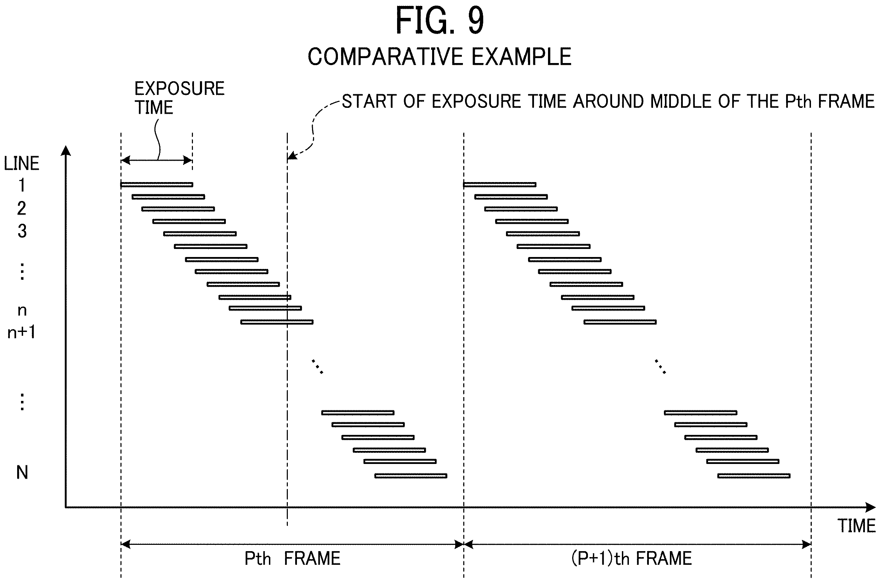

FIG. 9 is a timing chart of a sequential readout of a light receiving unit as a comparative example. In the comparative example illustrated in FIG. 9, the light emitting unit emits light (i.e., light emission) for a certain period of time, for example, about 10 millisecond (ms), around the middle of the Pth frame (i.e., during the exposure time of a certain line). As a result, in a two-dimensional image acquired in the Pth frame, a lower half part of the two-dimensional image is overexposed (i.e., with uneven exposure to laser irradiation). Such a two-dimensional image with the uneven exposure is a poor-quality image and is not used for a package inspection. Thus, two-dimensional images of (P-1)th frame and (P+1)th frame are used before and after the light emission (or light irradiation). However, one frame (i.e., Pth frame) is unusable (i.e., frame missing). If the package has a time change during the inspection, the frame missing may decrease the accuracy of the inspection.

As illustrated in FIG. 9, when the light emitting unit emits light in the middle of the Pth frame, some lines are exposed to and some lines are unexposed to the light and the two-dimensional image has the uneven exposure. In the present embodiment, as illustrated in FIG. 7, the light receiving unit 32 may have a limited region to acquire a two-dimensional image, and the remaining region of the light receiving unit 32 is referred to as a non-limited region. In the present embodiment, as illustrated in FIG. 7, the limited region of the light receiving unit 32 limits the lines along the readout direction. These lines are not exposed to the light during these exposure times. Although the light receiving unit 32 outputs signals from all the lines (i.e., the 1st line to the Nth line) including all the pixels, the two-dimensional image acquisition unit 402 limits the signals as information. Since the signals output from the lines of the non-limited region are not used as information in the following processing, the light emission to the non-limited region during the exposure times of the lines does not cause any troubles. Preferably, the limited region is set around the center portion of the light receiving unit 32 in view of an optical performance of a lens used in the inspection apparatus.

As described above, the light receiving unit 32 has a rectangular shape. Each line outputs a signal, and the readout direction is along the shorter side including less pixels of the rectangular shape. In the present embodiment, the signals to be output from the limited region along the readout direction is used. Thus, in order to increase the spatial resolution of the two-dimensional image, preferably, the directions of the shorter side of light receiving unit 32 and the shorter side of the sealing portion 52 are matched.

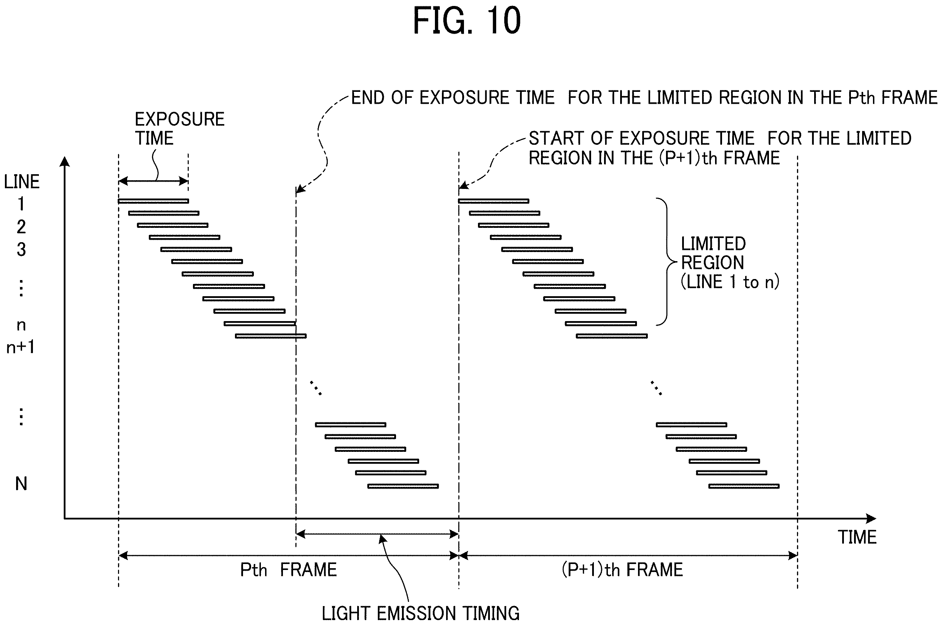

FIG. 10 is a timing chart of a sequential readout in which the light emitting unit emits light during the exposure times of the lines of the non-limited region of the light receiving unit 32. In FIG. 10, the limited region of the light receiving unit 32 is limited to the first line to the nth line (i.e., line 1 to n). As illustrated in FIG. 10, the light emitting unit starts emitting light at the end of the exposure time of the line of the limited region in the Pth frame and ends emitting the light at the start of the exposure time of the line of the limited region in the (P+1)th frame. In the present embodiment, a two-dimensional image before the light emission is acquired from the limited region in the Pth frame and a two-dimensional image after the light emission is acquired from the limited region in the (P+1)th frame. Thus, two-dimensional images having a higher quality are acquired without missing any frames.

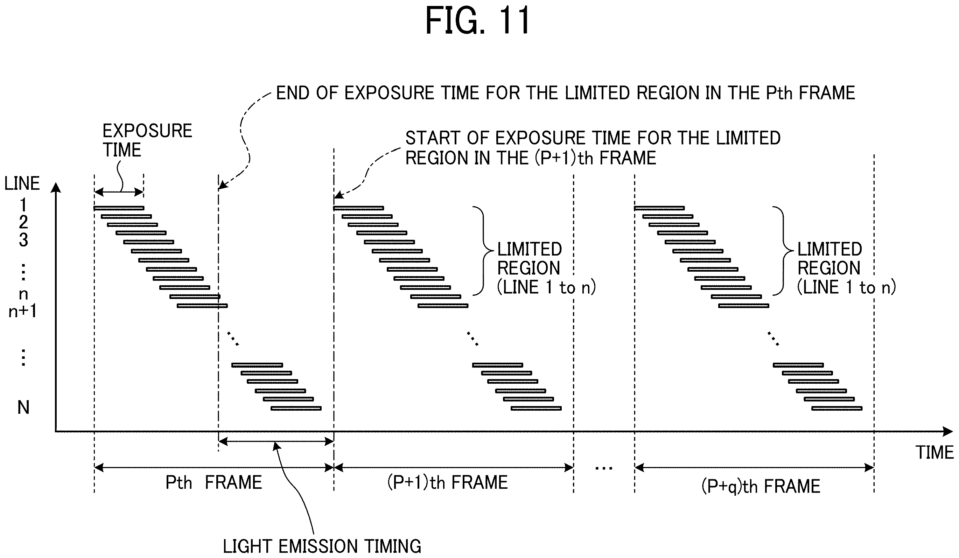

FIG. 11 is another timing chart of a sequential readout in which the light emitting unit emits light during the exposure times of the lines of the non-limited region of the light receiving unit 32. As illustrated in FIG. 11, a two-dimensional image before the light emission of is acquired from the limited region in the Pth frame and a two-dimensional image after the light emission is also acquired from the limited region in the (P+q) frame. Since a two-dimensional image before the light emission is acquired and the light emission starts within the Pth frame only, a higher-quality two-dimensional image is acquired without wasting time in inspection.

The limited region is not limited to the line 1 to n and may be, for example, the line n to N. In such a case, the light emitting unit starts emitting light at the end of the exposure time of the line of the limited region in the Pth frame and ends emitting light at the start of the exposure time of the line of the limited region in the (P+1)th frame.

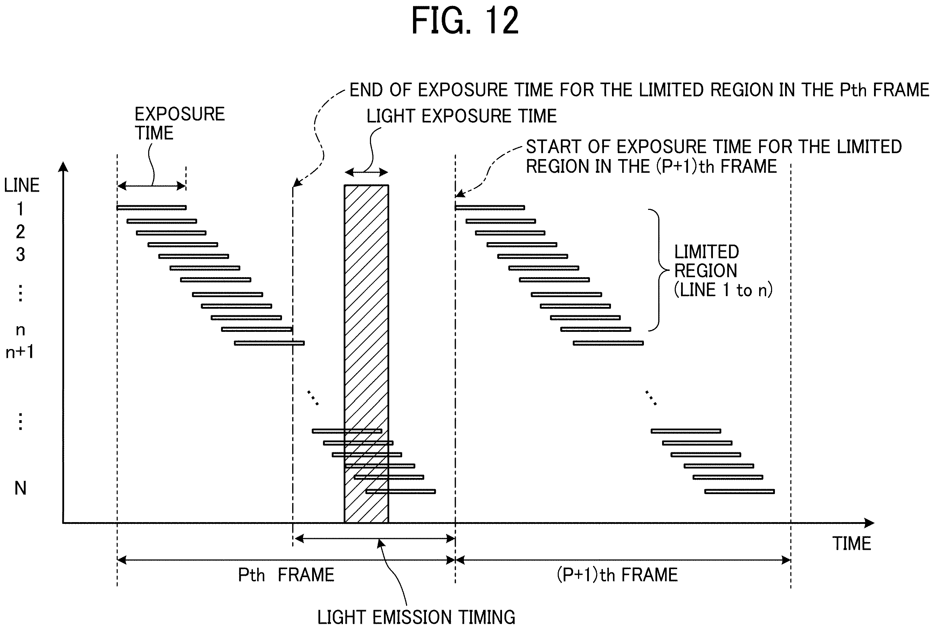

The light exposure time in the light emitting unit 31 will be described in detail. FIG. 12 is a timing chart in which the light emitting unit 31 emits light for a certain period of time (i.e., light exposure time). As illustrated in FIG. 12, the light emitting unit 31 starts to emit light after the end of the exposure time of the line of the limited region in the Pth frame and ends to emit light before the start of the exposure time of the line of the limited region in the (P+1)th frame (i.e., light exposure time).

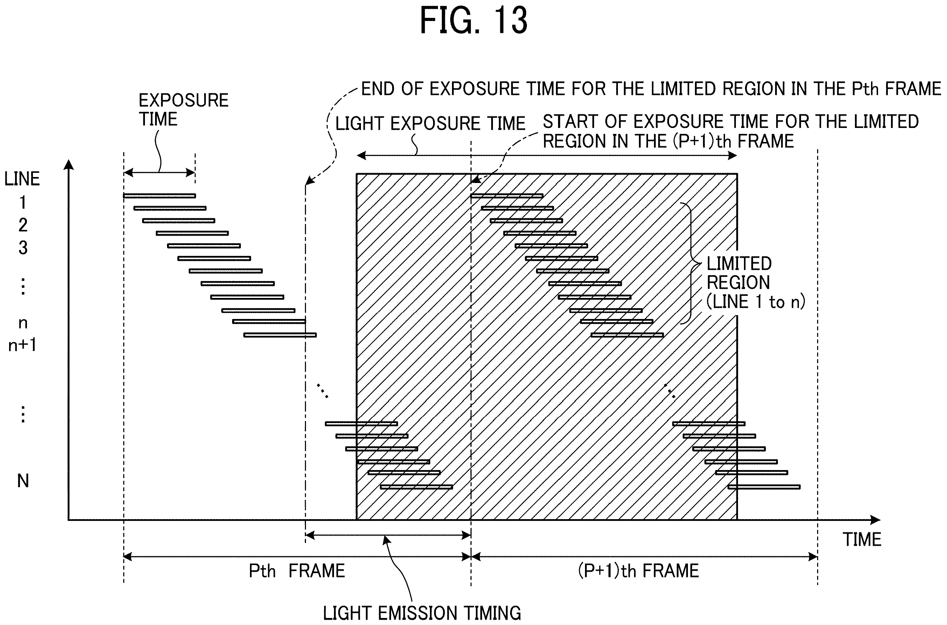

FIG. 13 is another timing chart in which the light emitting unit 31 emits light for a certain period of time (i.e., light exposure time). As illustrated in FIG. 13, the light emitting unit 31 may start to emit light after the end of the exposure time of the line of the limited region in the Pth frame and end to emit the light in the middle of the exposure time of the line of the non-limited region in the (P+1)th frame.

When a two-dimensional image of the package 50 being conveyed by the conveyor unit 2 is acquired using the light receiving unit 32 having the sequential readout for each line having a time delay in the exposure time, the image is distorted. Preferably, the package 50 is being temporarily stopped for a certain period of time on the conveyor unit 2, the light emitting unit 31 emits light to the package 50, and the light receiving unit 32 receives thermal radiation (i.e., light reception) from the package between the Pth frame and the (P+1) frame.

The package 50 is stopped on the conveyor unit 2 of the inspection apparatus 1 is stopped (i.e., stopping configuration). The stopping configuration will be described. Specifically, the conveyor unit 2 stops the package 50 by applying the stopping configuration described below.

The controller 401 of the controller device 4 (FIG. 5) controls the first conveyor part 21 to convey the packages 50 at the speed V1. The speed V1 is also referred to as a constant speed V. The controller 401 of the controller device 4 (FIG. 5) controls the second conveyor part 22 to convey the packages 50 at the speed V2. The speed V2 is varied from 0 to V. In addition, the friction coefficient µ1 of the belt surface of the first conveyor part 21 that conveys the package 50 and the friction coefficient µ2 of the belt surface of the second conveyor part 22 that conveys the package 50 are different from each other, and µ1 is smaller than µ2 (i.e., µ1 < µ2).

As illustrated in FIG. 1, the conveyor unit 2 includes a position-and-angle aligner 23 in the first conveyor part 21. As a simple example, the position-and-angle aligner 23 is configured by a guide part made of aluminum. The package 50 conveyed on the first conveyor part 21 has a certain range of positional variation with respect to an orthogonal direction of the conveying direction (i.e., initial position of the package). The position-and-angle aligner 23 is a guide part to align the initial position of the package 50 being conveyed on the first conveyor part 21 to a predetermined position. The initial position is displaced in a direction orthogonal to the conveying direction. The package 50 conveyed on the first conveyor part 21 also has a certain range of angle variation with respect to an orthogonal direction of the conveying direction (i.e., initial angle of the package). The position-and-angle aligner 23 is the guide part for aligning the initial angle of the package 50 being conveyed on the first conveyor part 21 to a predetermined angle. The initial angle is tilted with respect to the direction orthogonal to the conveying direction. The position-and-angle aligner 23 is not limited to the guide part made of aluminum, and existing techniques may be used.

The package 50 is conveyed on the first conveyor part 21 at a constant speed V, and the position and the angle of the package are aligned in the direction orthogonal to the conveyor direction by the position-and-angle aligner 23. The position-and-angle aligner 23 aligns the package 50 to be substantially parallel to the conveying direction and the direction orthogonal to the conveying direction. The friction coefficient µ1 of the belt of the first conveyor part 21 is set such that the package 50 slides in the direction orthogonal to the conveying direction according to the position-and-angle aligner 23 while being conveyed on the belt of the first conveyor part 21 in the conveying direction.

The package 50 in which the position and the angle are aligned by the position-and-angle aligner 23 is conveyed from the first conveyor part 21 to the second conveyor part 22. The first conveyor part 21 and the second conveyor part 22 are arranged having a predetermined gap O therebetween. When the package 50 conveys to the second conveyor part 22, the second conveyor part 22 decreases the conveying speed of the package 50 from V to 0 and stops. The package 50 being conveyed at the speed V2 stops with little slide on the belt of the second conveyor part 22. The friction coefficient µ2 of the belt of the second conveyor part 22 is set such that slide of the package 50 due to decreasing the speed is unlikely to occur.

Thus, the position and the angle of the package 50 in the direction orthogonal to the conveyor direction is aligned by the position-and-angle aligner 23, and the speed of the belt of the second conveyor part 22 having the friction coefficient µ2 larger than µ1 is decreased from V to 0. The package 50 stops. As described above, the package 50 being conveyed is temporarily stopped, and a two-dimensional image is acquired by the light receiving unit 32 while the package 50 is being stopped. Thus, blurring or image distortion that occurs at the time of acquiring the image does not occur. In addition, the influence of a temperature change due to convection during conveying is reduced.

As described above, the position of the package 50 in the direction orthogonal to the conveying direction is aligned by the position-and-angle aligner 23. The stop position of the package 50 in the conveying direction is determined by controlling the second conveyor part 22 to decrease the speed of conveying and stop. When the package 50 slides on the belt of the second conveyor part 22 due to inertia, the controller 401 (FIG. 5) of the controller device 4 controls the second conveyor part 22 to decrease the speed of conveying the package 50 including the amount of the slide. Thus, the conveyor unit 2 enables the sealing portion 52 to set a position within in the field of view of the light receiving unit 32 in the conveying direction and the direction orthogonal to the conveying direction. When the position of the package 50 is determined with higher accuracy, there is an advantage in reducing the image size by trimming a region of a two-dimensional image acquired by the light receiving unit 32 as thermal information.

When the package 50 has a substantially rectangular parallelepiped shape, a two-dimensional image in which the sides of the package 50 and the sides of the light receiving unit 32 are substantially parallel to each other is acquired. In such a case, trimming image processing of the two-dimensional image of the package 50 is easy to perform.

The second conveyor part 22 increases the conveyor speed of the package 50 from 0 to V and keeps the conveying speed of the package 50 at the constant speed V.

As illustrated in FIG. 1, the conveyor unit 2 may include a positioning part 24 to determine a stop position of the package 50 in the conveying direction in the second conveyor part 22. As described above, when the package 50 conveyed to the second conveyor part 22, the controller device 4 controls the second conveyor part 22 to decrease the conveying speed of the package 50 from V to 0 and stop. Since the positioning part 24 is disposed on the second conveyor part 22 and the top of the package 50 touches the positioning part 24, the conveyor unit 2 accurately determines the position of the package 50 to be stopped.

As a simple example, the positioning part 24 is a stopper made of aluminum. The position and the angle of the package 50 are aligned in the direction orthogonal to the conveying direction of the package 50 by the position-and-angle aligner 23. The package 50 having a substantially rectangular parallelepiped shape is stopped by touching the top side of the packaged 50 substantially parallel to a part of the positioning part 24 orthogonal to the conveying direction.

Specifically, the controller 401 of the controller device 4 (FIG. 5) controls the positioning part 24 to lower a plate portion of the positioning part 24 on the belt of the second conveyor part 22 in accordance with a timing in which the second conveyor part 22 decreases the conveying speed and stops. The controller 401 of the controller device 4 (FIG. 5) controls the positioning part 24 to lift the plate portion of the positioning part 24 and restart conveying the package 50 after the light emission by the light emitting unit 31 and the light reception by the light receiving unit 32.

When the package 50 has a circular shape, the positioning part 24 may have an arc-shaped stopper corresponding to the shape of the package 50. The positioning part 24 is not limited thereto, and existing technique may be used.

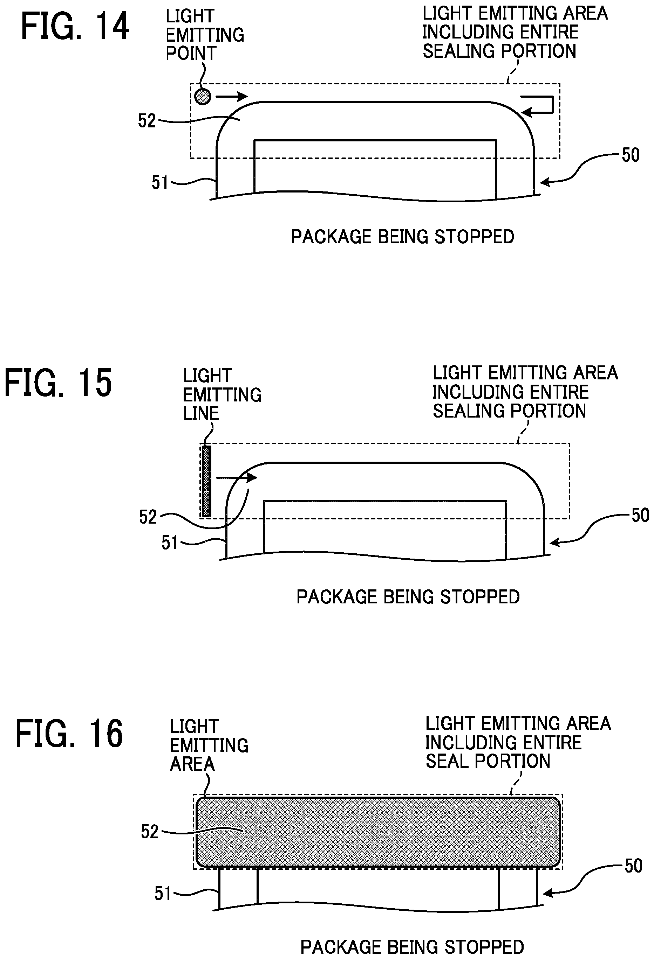

Light emission of the light emitting unit 31 will be described. FIG. 14 is a diagram of a point light source to emit light on the package being stopped. As illustrated in FIG. 14, the point light source emits the light to the sealing portion 52 in a point shape. As illustrated in FIG. 14, when emitting the light to the package 50 being stopped, the light emitting unit 31 two-dimensionally emits the light by the point light source through an optical system that two-dimensionally scans the sealing portion 52.
FIG. 15 is a diagram of a line light source to emit light on the package being stopped. As illustrated in FIGS. 15 and 8, the line light source emits the light to the sealing portion 52 in a line shape. The line light source may be composed of the point light sources arranged in one row or multiple rows or may form a line-shaped emission pattern through an optical system using the point light sources. As illustrated in FIG. 15, when emitting the light to the package 50 being stopped, the light emitting unit 31 two-dimensionally emits the light to the package 50 by a line light source slightly longer than the lateral width of the sealing portion 52 through an optical system that one-dimensionally scans the sealing portion 52.

FIG. 16 is a diagram of an area light source to emit light on the package being stopped. As illustrated in FIGS. 16, the area light source emits the light to the sealing portion 52 in an area shape as one shot. The area light source may be composed of the point light sources arranged vertically and horizontally, the line light sources arranged in a row, or these light sources are combined with an optical system to form an area shaped emitting pattern. Thus, in the area light source the point light sources are arrayed in vertical and horizontal directions. As illustrated in FIG. 16, when emitting the light to the package 50 being stopped, the light emitting unit 31 using the area light source emits the light to the package 50 by one shot.

The light receiving unit 32 will be described. On the other hand, the light receiving unit 32 may be any one of the point light receiving element, the line light receiving element, and the area light receiving element as long as these light receiving elements two-dimensionally receive thermal radiation from the entire sealing portion 52 upon the light emission to the sealing portion 52. A microbolometer may be applied to the area light receiving element.

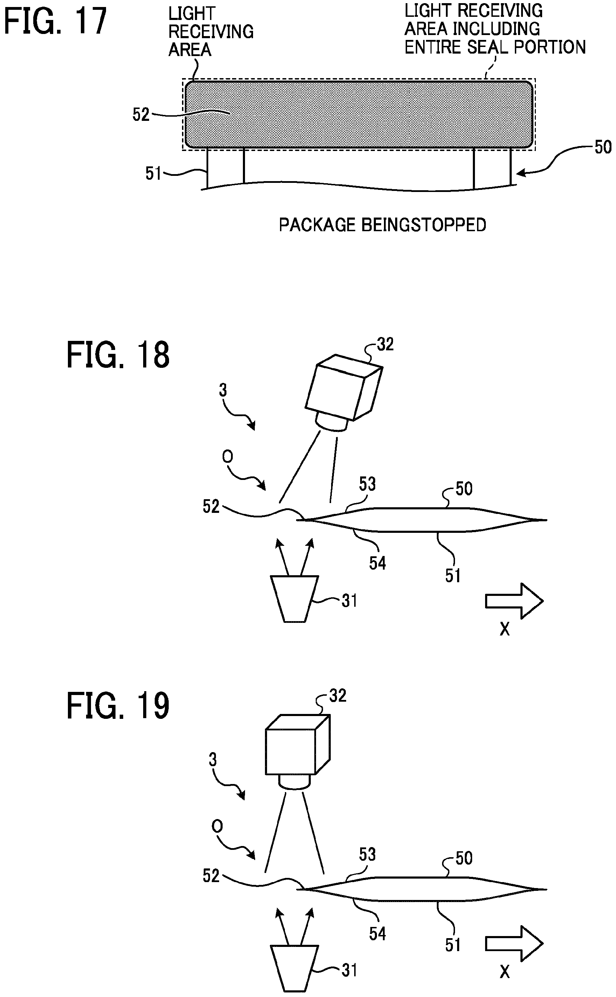

FIG. 17 is a diagram of an area light receiving element to receive thermal radiation from the package being stopped; As illustrated in FIG. 17, when the light receiving unit 32 receives the thermal radiation from the package 50 being stopped, the light receiving unit 32 receives the thermal radiation form the sealing portion 52 with the area light receiving element as one shot.

As described above, there are various modifications for the light emitting unit 31 that emits light to the entire sealing portion 52 and the light receiving unit 32 that receives thermal radiation from the entire sealing portion 52. In the present embodiment, the light emitting unit 31 is an area light source, and the light receiving unit 32 is an area light receiving element. As described above, by combining the area light source and the area light receiving element, the light can be emitted to the entire sealing portion 52 as one shot and the thermal radiation from the entire sealing portion 52 can be received as one shot, even when the package 50 is being conveyed or stopped. Further, in the case of using an area light source in which the point light sources (e.g., LEDs) are arranged vertically and horizontally and an area light receiving element, an optical system for one- or two-dimensional scanning (i.e., a movable component) may be excluded, and a higher-quality image can be acquired without being affected by vibration of the movable component.

The positional relation between the light emitting unit 31 and the light receiving unit 32 (i.e., arrangement or layout) will be described in detail.

As described above, the light receiving unit 32 does not directly receive the light emitted from the light emitting unit 31 and the light transmitted through the sealing portion 52 of the package material 51 or the light reflected from the sealing portion 52. The light receiving unit 32 receives light emitted from the surface of the package material 51 as the thermal radiation generated by the light emitted from the light emitting unit 31. The light emitting unit 31 and the light receiving unit 32 are not limited to an arrangement based on transmission of the light or regular reflection of the light. Thus, the latitude in the layout of the light emitting unit 31 and the light receiving unit 32 is increased.

FIG. 18 is a diagram of a first layout of the light emitting unit 31 and the light receiving unit 32 as an example. In the example illustrated in FIG. 18, the light receiving unit 32 is installed with an optical axis tilted with respect to the light emitting unit 31 and the sealing portion 52 of the package material 51 having the surfaces substantially parallel to the conveying direction X. By titling the optical axis of the light receiving unit 32 with respect to the sealing portion 52 of the package material 51, the reflection (the reflection image) of the light receiving unit 32 itself can be prevented.

Specifically, as illustrated in FIG. 18, the package 50 has a bloated portion to pack the contents inside the package material 51. The package 50 has a slope portion 53. The sealing portion 52 is substantially parallel to the conveying direction X, but the slope portion 53 is tilted with respect to the conveying direction X. In FIG. 18, the light receiving unit 32 is installed with the optical axis tilted in the same manner as the slope portion 53.

FIG. 19 is a diagram of a second layout of the light emitting unit 31 and the light receiving unit 32 as an example. In the example illustrated in FIG. 19, under a condition that there is no influence of reflection of the light receiving unit 32 itself, the light receiving unit 32 may be disposed at a position orthogonal to the sealing portion 52 which is a surface substantially parallel to the conveying direction X without being tilted.

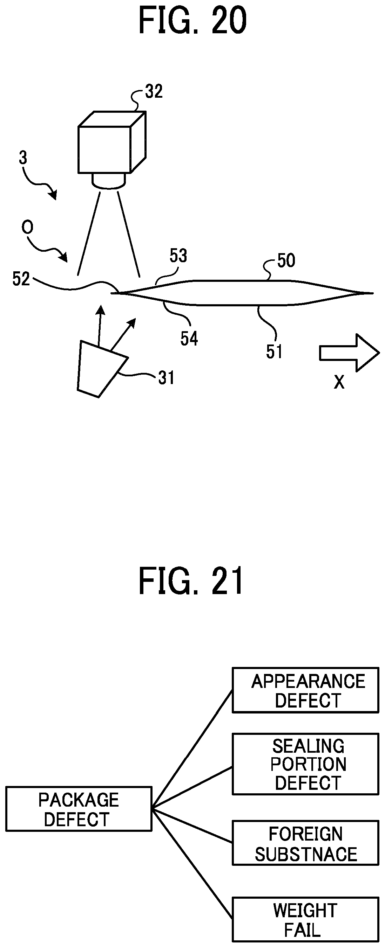

FIG. 20 is a diagram of a third layout of the light emitting unit 31 and the light receiving unit 32 as an example. In the example illustrated in FIG. 20, in addition to the second layout of FIG. 19, the light emitting unit 31 is installed with its optical axis tilted with respect to the sealing portion 52 of the package material 51 and the light receiving unit 32 which are surfaces substantially parallel to the conveying direction X.

The defect discrimination unit 403 will be described. The defect discrimination unit 403 determines whether the package 50 is pass or fail. FIG. 21 is a tree diagram of classification of defects of the package 50 (i.e., package defect). As illustrated in FIG. 21, the defects of the package 50 are roughly classified into several types such as appearance defect, sealing portion defects, foreign substance, and weight fail. Each defect of the package 50 is inspected through a dedicated inspection apparatus or through visual inspection by an inspector.

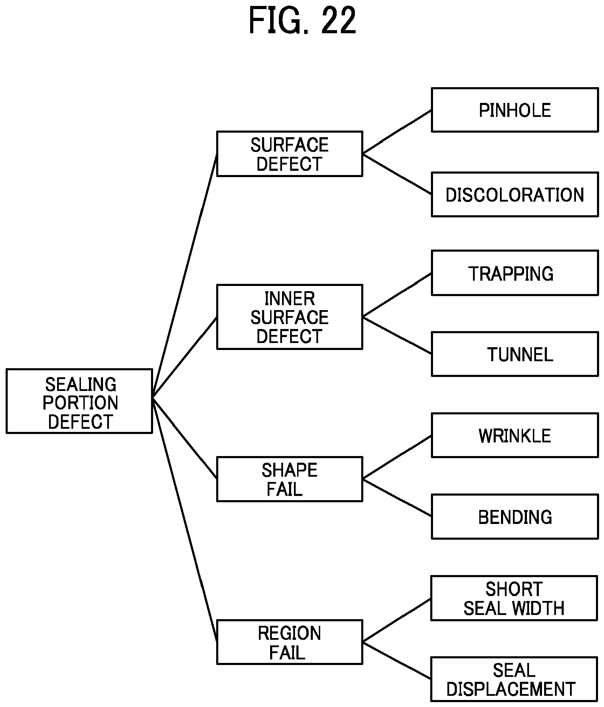

FIG. 22 is a tree diagram of classification of defects of sealing portion 52 (i.e., sealing portion defect). As illustrated in FIG. 22, the sealing portion defect of the sealing portion 52 of the package 50 is further classified into a middle classification and a small classification based on occurrence factors or features thereof. The sealing portion defect of the sealing portion 52 of the package 50 is classified into a middle classification including a surface defect, an inner surface defect, a shape fail, and a region fail. Further, the middle classification is classified into a small classification. The small classification of the sealing portion defect includes pinhole, discoloration, trapping, tunnel, wrinkle, bending, short seal width, and seal displacement. In the present embodiment, the types of the defects of the sealing portion 52 of the package 50 are the small classification.

As described above, when the sealing portion 52 of the package 50 has the anomaly state, the heat capacity of the anomaly state of the sealing portion 52 changes with respect to normal state. For example, when a content or a portion of the content of the package 50 is trapped in the sealing portion 52 (i.e., trapping), the trapping is a defect in which the content is trapped between the packaging materials (i.e., one package material 51 and the opposite packaging material 51). Thus, a new layer is generated by the content trapped in the sealing portion 52, and heat transfer slows. A tunnel is a defect in which a passage through which the content leaks to the outside of the package is formed in the sealing portion 52. Since there is an air layer between one packaging material 51 and the opposite package material 51, heat transmission slows due to high thermal resistance of air. When the sealing portion 52 of the package 50 is in an anomaly state as described above, it takes time for heat to reach the surface of the sealing portion 52 and the time delays, so that a temperature distribution occurs on the surface. Thus, the defect discrimination unit 403 can determine that the two-dimensional image is in an anomaly state, that is, not acceptable, based on the temperature distribution generated in the two-dimensional image having the thermal information.

The defect discrimination unit 403 determines whether the sealing portion 52 of the package 50 is in a normal state or in an anomaly state (i.e., determination of pass or fail) based on the two-dimensional image having the thermal information. The defect discrimination unit 403 applies various conventional image processing on the two-dimensional image in order to reveal an anomaly state. The image processing will be described below.

The pass-or-fail determination of the sealing portion 52 in the defect discrimination unit 403 will be described.

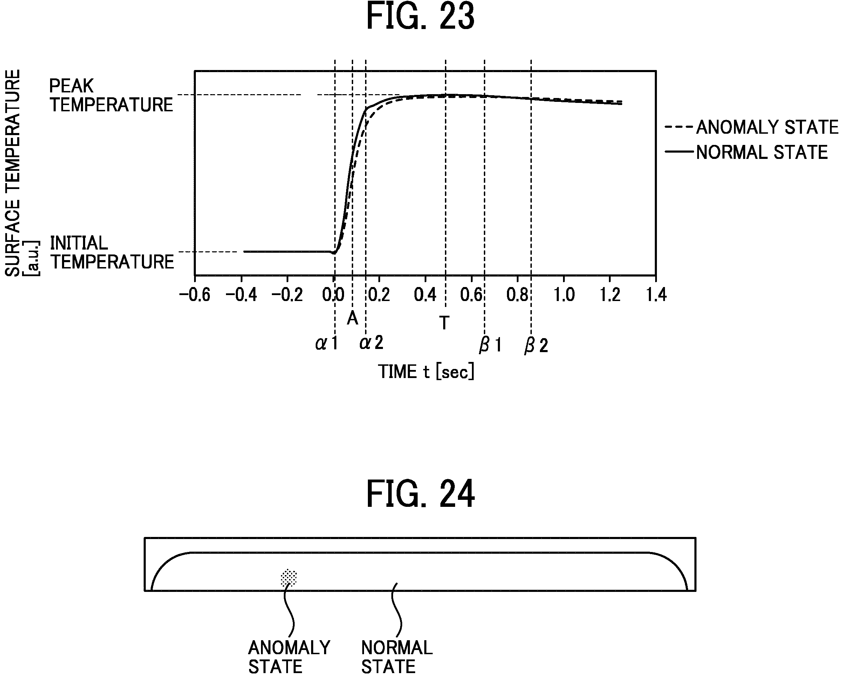

FIG. 23 is a graph of a change over time t of the surface temperature between a position in a normal state and a position in an anomaly state illustrated in FIG. 24. FIG. 23 is a two-dimensional image related to the pass-or-fail determination of the sealing portion 52 as an specific example. In FIG. 24, as an example of the anomaly state, an air layer is in the sealing portion 52. The anomaly state described above also occurs in the tunnel, or the trapping of the content including air.

In the example illustrated in FIG. 23, light is emitted from the light emitting unit 31 to one side of the sealing portion 52 including aluminum and having the normal state and the anomaly state at time 0, and the temperature distribution of the surface at the other side of the sealing portion 52 is acquired at certain time. The time 0 is the time when the light emitting unit 31 emits light to the sealing portion 52.

The two-dimensional image in FIG. 24 is an image acquired at time A in FIG. 23. The image in FIG. 24 is a monochrome image in which a white portion indicates higher temperature and a grey portion indicates a lower temperature. As illustrated in FIG. 24, the position in which the anomaly state (i.e., defect) occurs due to the air layer in the sealing portion 52 is darker than the surroundings.

In the example of FIG. 23, the temperature of the normal state reaches the peak temperature at time T. Although the time T varies depending on the type and thickness of the package material 51, it is about several hundred ms to 1 second (s or sec) or less. By contrast, as illustrated in FIG. 23, the position of the anomaly state (defect) reaches the peak temperature after the time T, and the peak temperature of the normal state and the anormal state are almost the same. From FIG. 23, when the time t is larger than 0 and smaller than T (i.e., 0 < t < T), the temperature is higher in the normal state than in the anomaly state. The normal state and the anomaly state have almost the same peak temperature over time, and the temperature difference becomes smaller after passing the peak temperature.

As described above, when the air layer is present in the seal portion 52 as illustrated in FIG. 24, the thermal resistance of the sealing portion 52 in which the air layer is present increases. As a result, heat transfer slows. The time varying of the surface temperature of the sealing portion 52 is different between the normal state and the anomaly state, and a large temperature difference capable of detecting is generated at a certain time. The defect discrimination unit 403 detects an anomaly state by acquiring the two-dimensional image at this time.

Depending on the anomaly state, the thermal resistance may become smaller, and the temperature of the anomaly state may become higher than the surrounding temperature. In such a case, the anormal state of the sealing portion 52 can be detected by inspecting the difference between the normal state and the anomaly state.

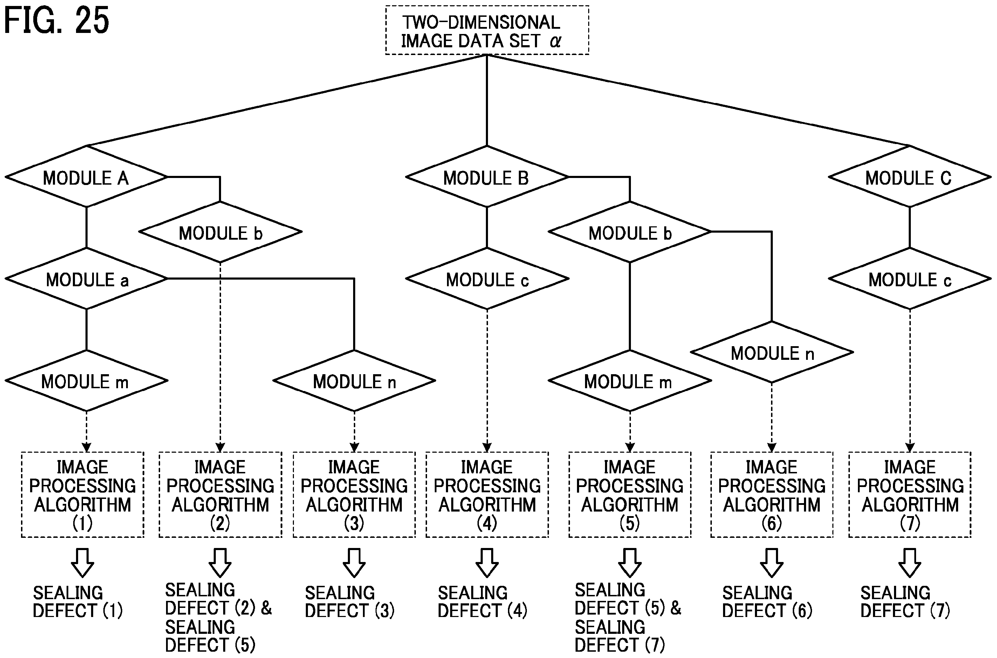

FIG. 25 is a tree diagram of a relation between modules (i.e., image processing modules), image processing algorithms, and sealing defects. As illustrated in FIG. 25, there are multiple image processing modules (i.e., modules), multiple types of defects of the sealing portion 52 of the package 50, and multiple image processing algorithms. A certain image processing algorithm suitably discriminates a certain type of sealing defect from other types of sealing defects to identify a type of sealing defect. As illustrated in FIG. 25, an image processing algorithm includes multiple image processing modules (i.e., modules) to suitably discriminate a certain type of sealing defect from other types of sealing defects. In other words, an image processing algorithm more suitably discriminates a certain type of sealing defect from other types of sealing defects by combining multiple image processing modules.

For example, the image processing algorithm (1) to discriminate the sealing defect (1) from other types of sealing defects (2) to (7) will be described (FIG. 25). The defect discrimination unit 403 includes an image processing algorithm (1) to discriminate the sealing defect (1) from other types of sealing defects (2) to (7). The image processing algorithm (1) includes an image processing module A (module A), an image processing module a (module a), and an image processing module m (module m), and sequentially processes these image processing modules. The defect discrimination unit 403 inputs the two-dimensional image data set α into the module A as first image processing. Each module applies various image processing such as rotational deformation processing, averaging processing, and edge extraction processing.

In FIG. 25, the image processing algorithm (2) discriminates the sealing defect (2) and the sealing defect (5) from the other types of sealing defects based on criteria such as a difference in a threshold value with respect to the processing result. In FIG. 25, the image processing algorithm (5) discriminates the sealing defect (5) and the sealing defect (7) from other types of sealing defects based on criteria with respect to the processing result. In other words, the sealing defect (5) is discriminated by different image processing algorithms (i.e., image processing algorithms (2) and (5)). Since the sealing defect (5) is discriminated from the other sealing defects by the image processing algorithm (2) and the image processing algorithm (5) at the same time, accuracy of occurrence of the sealing defect (5) increases.

As described above, the defect discrimination unit 403 includes multiple image processing algorithms to discriminate between sealing defects that cannot be overlooked and any one of image processing algorithms detects the sealing defect, overlook of the sealing defect is less likely to occur.

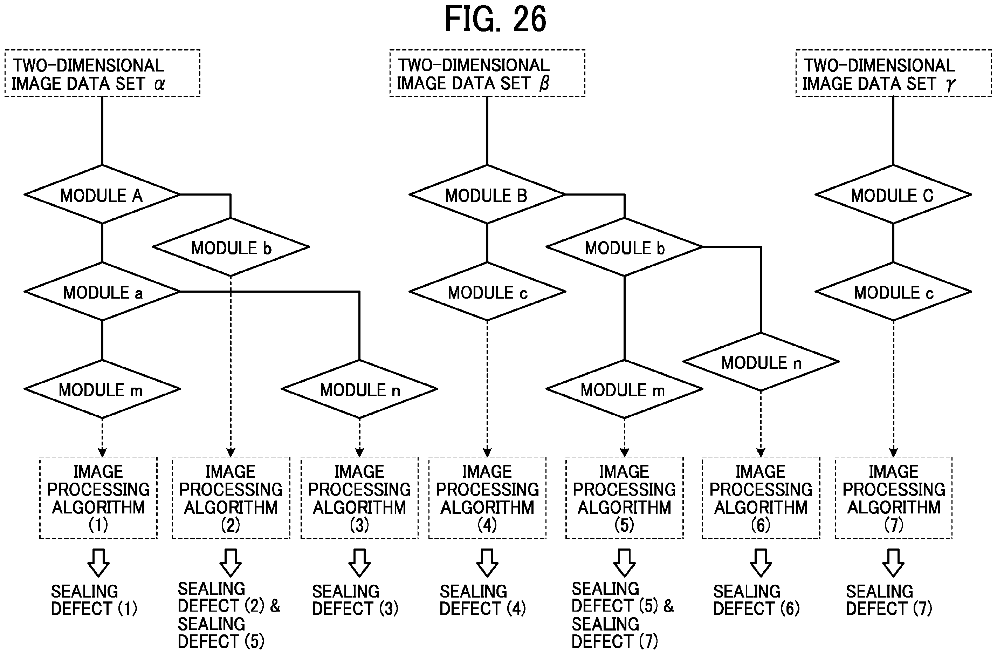

FIG. 26 is another tree diagram of a relation between image processing modules (modules), image processing algorithms, and sealing defects. In the example illustrated in FIG. 26, there are multiple two-dimensional image data sets to be used for multiple image processing algorithms.

As described above, the light emitting unit 31 and the light receiving unit 32 work under a certain condition, and a two-dimensional image is acquired from the thermal information. As an example of a practical condition, the light emitting unit 31 starts to emit light having a desired power at a desired time and ends to emit the light after a desired duration time. The light receiving unit 32 receives thermal radiation from the sealing portion 52 of the package 50 at a desired period of time (i.e., frame rate) and the desired number of two-dimensional images in accordance with the light emission timing of the light emitting unit 31. The light receiving unit 32 may select a desired region (i.e., size of light receiving area) for the light reception. The defect discrimination unit 403 acquires a two-dimensional image having two-dimensional thermal information of the sealing portion 52 of the package 50 from the thermal information received in this manner. At this time, the defect discrimination unit 403 may perform image processing such as adjustment of image size or image contrast.

The defect discrimination unit 403 generates multiple two-dimensional image data sets from the two-dimensional image acquired under a certain condition on operations of the light emitting unit and the light receiving unit (i.e., light emission-and-reception condition) described above.

The generation of multiple two-dimensional image data sets will be described. The defect discrimination unit 403 generates multiple two-dimensional image data sets from two-dimensional images acquired under different light emission-and-reception conditions. Herein, the different light emission-and-reception conditions are not mechanical conditions such as positional changes of the light emitting unit 31, the light receiving unit 32, or at least one part that constitutes the light emitting unit 31or the light receiving unit 32. Thus, the different light emission-and-reception conditions are, for example, changes of set vales in a software or in circuitry (i.e., software and circuitry conditions). Specifically, the changes of set values are , a change in light emission power, a stat timing of light emission, and duration period of light emission in the light emitting unit 31, or a change in a period of time (i.e., frame rate), the number of two-dimensional images to be acquired, or light receiving size in the light receiving unit 32.

Since the defect discrimination unit 403 does not use the mechanical conditions and use the software and circuitry conditions, the defect discrimination unit 403 changes the conditions in a short time. As a result, the package inspection is done at a constant speed. As a result, a latitude of generating the two-dimensional image data set increases.

For example, when the defect discrimination unit 403 acquires three two-dimensional images (sequentially, 1st image, 2nd image, and 3rd image) under a condition in which three two-dimensional images are acquired, the defect discrimination unit 403 may create a two-dimensional image data set α consisting of the 2nd image and a two-dimensional image data set β consisting of the first image, the second image, and the third image (i.e., all three images). The defect discrimination unit 403 may perform image processing such as differential processing or processing on rate of change in the image using, for example, the three images in the two-dimensional image data set β. The two-dimensional image data set β has a different feature as compared with the two-dimensional image data set α consisting of one two-dimensional image as an input image.

In some embodiments, the controller 401 of the inspection apparatus 1 controls a light emitter to emit light and controls a light receiver to receive thermal radiation as thermal information at the same condition, and generates the multiple two-dimensional image data sets based on the thermal information acquired.

In some embodiments, the controller 401of the inspection apparatus 1 controls the light emitter to emit the light and controls the light receiver to receive the thermal radiation at different number of two-dimensional images, and generates the multiple two-dimensional image data sets based on the thermal information acquired.

In some embodiments, the controller 401 of the inspection apparatus 1 controls the light emitter to emit the light at different light emitting conditions and controls the light receiver to receive the thermal radiation at different light receiving conditions to acquire the thermal information, and generates the multiple two-dimensional image data sets based on the thermal information acquired.

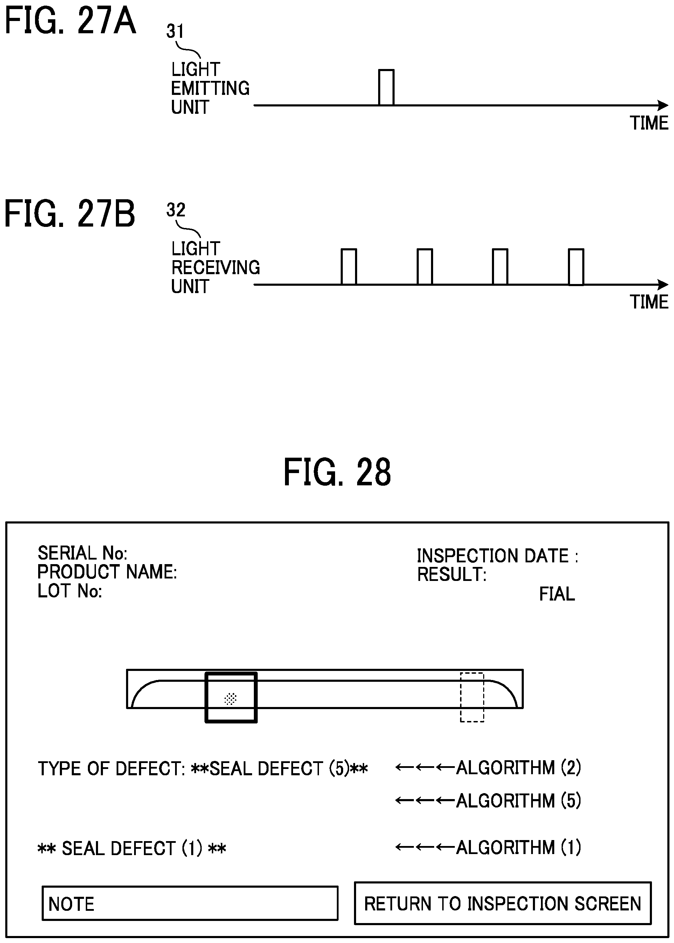

As another example, the defect discrimination unit 403 may generate a two-dimensional image data set having different light receiving timings. FIG. 27A is a timing chart of light emission. FIG. 27B is a timing chart of light reception (i.e., reception of thermal radiation). FIG. 27A is a timing chart in which the light emitting unit 31 emits light to the package 50. FIG. 27B is a timing chart in which the light receiving unit 32 receives thermal radiation from the package 50 and four images are received.

The defect discrimination unit 403 may generate the two-dimensional image data set α including the first two-dimensional image and the second two-dimensional image, and a two-dimensional image data set β including the third two-dimensional image and the fourth two-dimensional image. In the two-dimensional data set α, the first two-dimensional image is acquired before the light emission and the second two-dimensional image is acquired after the light emission. In the two-dimensional data set β, the third two-dimensional image and the fourth two-dimensional image are acquired after certain intervals from the light emission. Thus, these four two-dimensional images include information on different states of the package 50 as input images.

In an example illustrated in FIG. 23, two two-dimensional images of the two-dimensional image data set α are acquired at α1 and α2 around 0.0 to 0.2 sec when the surface temperature increases, and two two-dimensional images of the two-dimensional image data set β are acquired at β1 and β2 after 0.6 sec when the surface temperature decreases. Thus, the four two-dimensional images include different thermal information such as temperature rise or drop of the sealing portion 52, the defect discrimination unit 403 discriminates between the types of defects using different image processing algorithms.

Both the number of the two-dimensional image to be acquired and the light receiving timings may vary for the defect discrimination unit 403.

As illustrated in FIG. 26, the defect discrimination unit 403 may have multiple two-dimensional data sets to be input to each image processing algorithm. Specifically, the image processing algorithms (1) to (3) have an image processing module A (module A) as first image processing. The defect discrimination unit 403 inputs the two-dimensional data set α into the image processing module A. The image processing algorithms (4) to (6) have an image processing module B (module B) as the first image processing. The defect discrimination unit 403 inputs the two-dimensional data set β into the image processing module B. Since the two-dimensional image data set α is suitable for the image processing algorithm (1) and the two-dimensional image data set β is suitable for the image processing algorithm (2), a sealing defect is discriminated at a higher accuracy.

In some embodiments, the defect discrimination unit 403 may input the two-dimensional data set α into the image processing algorithm (1) and the two-dimensional data set β into the image processing algorithm (2).

The defect discrimination unit 403 displays a determination result (i.e., pass or fail) on the display device. In addition to the determination result, the defect discrimination unit 403 displays the type of sealing defect (i.e., type of defect) and a symbol or name indicating the image processing algorithm that discriminates the sealing defect when the determination result is fail.

FIG. 28 is an illustration of a screen of the determination result (i.e., result screen) as an example. As illustrated in FIG. 28, in the upper part of the result screen, notations relating to the package 50 and the inspection such as a serial number, a product name, a lot number, and an inspection date and time are displayed, and FIAL is displayed when the determination result is fail. When the determination result is pass, PASS is displayed.

As illustrated in FIG. 28, in the middle part of the result screen, a part of the two-dimensional image among the two-dimensional image data set, which indicates the location where the defect was detected, is displayed. For example, two sealing defects are displayed and the locations of the defects are surrounded by rectangular frames in FIG. 28.

As illustrated in FIG. 28, the two types of sealing defects are noted in the lower part of the result screen so that the relation between the defect and the location is clear. The names of the sealing defects are displayed in FIG. 28. The image processing algorithm that discriminated the type of the sealing defect is indicated so that the relation between the type of the sealing defect and the image processing algorithm is clear. In FIG. 28, the names of the image processing algorithms are displayed on the right side of the types of the sealing defects. If the name is complicated, a symbol may be used for expressing the sealing defect. In FIG. 25, the sealing defect (5) was discriminated by the image processing algorithm (2) and the image processing algorithm (5). In FIG. 28, the names of the two image processing algorithms are displayed in different two lines as a case where a sealing defect is discriminated by the two image processing algorithms. When a sealing defect discriminated by one image processing algorithm, the notation is one line.

Since the type of defect and the image processing algorithm that discriminated the defect is displayed on the result screen in accordance with the two-dimensional image, an inspector or a supervisor of the production line easily grasps the inspection state.

As described above, the inspection apparatus 1 determines whether the sealing portion 52 of the package 50 is pass or fail. Further, in the inspection apparatus 1, after the package 50 is conveyed by the second conveyor part 22 of the conveyor unit 2, the package 50 determined to be anomaly is removed from the second conveyor part 22 by a sorting means (e.g., rejector). By contrast, the package 50 determined to be a normal state is conveyed by the second conveyor part 22 and packed into a box by a packing means (e.g., caser) or manually.

As described above, according to the present embodiments, an inspection apparatus determines whether the sealing portion 52 of the package 50 is pass or fail and discriminates between the types of the sealing defect without an additional time for determining the type of the defect (i.e., the inspection speed is not decreased).

An inspection apparatus (1) includes: a light emitting unit (31) to emit light to a sealing portion (52) of a package (51) containing a light energy absorbing material, the light having a wavelength absorbable by the light energy absorbing material (51); a light receiving unit (32) to receive thermal radiation from the sealing portion (52) as thermal information; a controller device (4) including multiple image processing algorithms. The control device (4) acquires the thermal information on the sealing portion (52) from the light receiving unit (32) as a two-dimensional image, determines whether the sealing portion (32) is pass or fail based on the two-dimensional image acquired, and discriminates a type of a sealing defect from other types of sealing defects previously set in the multiple image processing algorithms in response to a determination that the sealing portion (32) is fail.

An inspection method includes: emitting light by a light emitting unit (31) to a sealing portion (52) of a package (51) including a light energy absorbing material, the light having a wavelength absorbed by the light energy absorbing material; receiving thermal radiation from the sealing portion (52) by a light receiving unit (32) as thermal information; acquiring the thermal information on the sealing portion (52) as a two-dimensional image based on the light receiving unit (32); determining whether the sealing portion (52) is pass or fail based on the two-dimensional image acquired; and discriminating a type of a sealing defect from other types of sealing defects previously set in multiple image processing algorithms in response to a determination that the sealing portion (32) is fail.

In the present embodiment, aluminum is used as a material that absorbs energy of light, but the material is not limited thereto, and other metals or resins may be used as long as the material absorbs energy of light (light energy) and converts into thermal energy.

In the present embodiment, a retort pouch is applied as the packaging material 51 of the package 50, but the package material 51 is not limited thereto, and can be applied to various packaging materials 51 that packs contents and seal openings. Examples of the package material 51 of the package 50 include, for example, a lid of a yogurt container, a container for sealing a medicine tablet therein.

The inspection apparatus 1 according to the present embodiment may be used for in-line inspection. In mass production, multiple products are sequentially conveyed on a belt conveyor and produced through multiple processes. An inspection process is one of the multiple processes, and the inspection apparatus is installed in the vicinity of the belt conveyor to sequentially inspect the produced products. Such an inspection is referred to as in-line inspection. A typical inspection apparatus acquires an image of an area of an object (e.g., package)while conveying the object. By contrast, the inspection apparatus 1 according to the present embodiment acquires a higher-quality image because the inspection apparatus 1 temporarily stops the package when acquiring the image of an area of the object. As a result, the accuracy of the inspection is increased. Thus, the inspection apparatus 1 is suitable for in-line inspection.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

## Claims

1. An inspection apparatus (1) comprising:
a light emitting unit (31) configured to emit light to a sealing portion (52) of a package (51) containing a light energy absorbing material, the light having a wavelength absorbable by the light energy absorbing material (51);
a light receiving unit (32) configured to receive thermal radiation from the sealing portion (52) as thermal information;
a controller device (4) including multiple image processing algorithms, the control device (4) configured to:
acquire the thermal information on the sealing portion (52) from the light receiving unit (32) as a two-dimensional image;
determine whether the sealing portion (32) is pass or fail based on the two-dimensional image acquired; and
discriminate a type of a sealing defect from other types of sealing defects previously set in the multiple image processing algorithms in response to a determination that the sealing portion (32) is fail.

2. The inspection apparatus (1) according to claim 1,
wherein controller device (4) is further configured to generate multiple two-dimensional image data sets used for the multiple image processing algorithms, and
the multiple image processing algorithms discriminate the type of the sealing defect from other types of sealing defects based on the multiple two-dimensional image data sets.

3. The inspection apparatus (1) according to claim 2,
wherein the controller device (4) is further configured to:
control the light emitting unit (31) to emit light;
control the light receiving unit (32) to receive thermal radiation as thermal information at the same condition, and
generate the multiple two-dimensional image data sets based on the thermal information acquired.

4. The inspection apparatus (1) according to claim 2,
wherein the controller device (4) is further configured to:
control the light emitting unit (31) to emit the light;
control the light receiving unit (32) to receive the thermal radiation at different timings in relation to the emitted light to acquire the thermal information; and
generate the multiple two-dimensional image data sets based on the thermal information acquired.

5. The inspection apparatus (1) according to claim 2,
wherein the controller device (4) is further configured to:
control the light emitting unit (31) to emit the light at different light emitting conditions; and
control the light receiving unit (32) to receive the thermal radiation at different light receiving conditions to acquire the thermal information, and
generate the multiple two-dimensional image data sets based on the thermal information acquired, wherein
the conditions are changes in set values of software or circuitry.

6. The inspection apparatus (1) according to any one of claims 1 to 5, further comprising a display,
wherein the defect discrimination unit (403) displays on the display:
a result of a determination of the sealing defect;
the type of the sealing defect; and
a name or a symbol indicating the multiple image processing algorithms that discriminates the type of sealing defect.

7. The inspection apparatus (1) according to any one of claims 1 to 6,
wherein the wavelength of the light emitted from the light emitting unit (31) and the wavelength of the thermal radiation received by the light receiving unit (32) are different from each other.

8. An inspection method comprising:
emitting light by a light emitting unit (31) to a sealing portion (52) of a package (51) including a light energy absorbing material, the light having a wavelength absorbed by the light energy absorbing material;
receiving thermal radiation from the sealing portion (52) by a light receiving unit (32) as thermal information;
acquiring the thermal information on the sealing portion (52) as a two-dimensional image based on the light receiving unit (32);
determining whether the sealing portion (52) is pass or fail based on the two-dimensional image acquired; and
discriminating a type of a sealing defect from other types of sealing defects previously set in multiple image processing algorithms in response to a determination that the sealing portion (32) is fail.

## Patentansprüche

1. Prüfvorrichtung (1), Folgendes umfassend:
eine Lichtemissionseinheit (31), die konfiguriert ist, um Licht auf einen Versiegelungsabschnitt (52) einer Verpackung (51) zu emittieren, die ein lichtenergieabsorbierendes Material enthält, wobei das Licht eine Wellenlänge aufweist, die von dem lichtenergieabsorbierenden Material (51) absorbierbar ist;
eine Lichtempfangseinheit (32), die konfiguriert ist, um Wärmestrahlung von dem Versiegelungsabschnitt (52) als thermische Informationen zu empfangen;
eine Steuereinrichtung (4), die mehrere Bildverarbeitungsalgorithmen einschließt, wobei die Steuereinrichtung (4) zu Folgendem konfiguriert ist:
Erfassen der thermischen Informationen auf dem Versiegelungsabschnitt (52) von der Lichtempfangseinheit (32) als ein zweidimensionales Bild;
Bestimmen, auf der Grundlage des erfassten zweidimensionalen Bildes, ob der Versiegelungsabschnitt (32) in Ordnung oder fehlerhaft ist; und
Unterscheiden einer Art eines Versiegelungsfehlers von anderen Arten von Versiegelungsfehlern, die zuvor in den mehreren Bildverarbeitungsalgorithmen festgelegt werden, als Reaktion auf eine Bestimmung, dass der Versiegelungsabschnitt (32) fehlerhaft ist.

2. Prüfvorrichtung (1) nach Anspruch 1,
wobei Steuereinrichtung (4) ferner konfiguriert ist, um mehrere zweidimensionale Bilddatensätze zu erzeugen, die für die mehreren Bildverarbeitungsalgorithmen verwendet werden, und
die mehreren Bildverarbeitungsalgorithmen die Art des Versiegelungsfehlers von anderen Arten von Versiegelungsfehlern auf der Grundlage der mehreren zweidimensionalen Bilddatensätze unterscheiden.

3. Prüfvorrichtung (1) nach Anspruch 2,
wobei die Steuereinrichtung (4) ferner zu Folgendem konfiguriert ist:
Steuern der Lichtemissionseinheit (31) derart, dass sie Licht emittiert;
Steuern der Lichtempfangseinheit (32) derart, dass sie Wärmestrahlung als thermische Informationen unter den gleichen Bedingungen empfängt, und
Erzeugen der mehreren zweidimensionalen Bilddatensätze auf der Grundlage der erfassten thermischen Informationen.

4. Prüfvorrichtung (1) nach Anspruch 2,
wobei die Steuereinrichtung (4) ferner zu Folgendem konfiguriert ist,:
Steuern der Lichtemissionseinheit (31) derart, dass sie das Licht emittiert;
Steuern der Lichtempfangseinheit (32) derart, dass sie die Wärmestrahlung zu verschiedenen Zeitpunkten in Bezug auf das emittierte Licht empfängt, um die thermischen Informationen zu erfassen; und
Erzeugen der mehreren zweidimensionalen Bilddatensätze auf der Grundlage der erfassten thermischen Informationen.

5. Prüfvorrichtung (1) nach Anspruch 2,
wobei die Steuereinrichtung (4) ferner zu Folgendem konfiguriert ist:
Steuern der Lichtemissionseinheit (31) derart, dass sie das Licht unter verschiedenen Lichtemissionsbedingungen emittiert; und
Steuern der Lichtempfangseinheit (32) derart, dass sie die Wärmestrahlung unter verschiedenen Lichtempfangsbedingungen empfängt, um die thermischen Informationen zu erfassen, und
Erzeugen der mehreren zweidimensionalen Bilddatensätze auf der Grundlage der erfassten thermischen Informationen, wobei
die Bedingungen Änderungen in den Sollwerten der Software oder derSchaltkreise sind.

6. Prüfvorrichtung (1) nach einem der Ansprüche 1 bis 5, ferner umfassend eine Anzeige,
wobei die Fehlerunterscheidungseinheit (403) auf der Anzeige Folgendes anzeigt:
ein Ergebnis einer Bestimmung des Versiegelungsfehlers;
die Art des Versiegelungsfehlers; und
einen Namen oder ein Symbol, das die mehreren Bildverarbeitungsalgorithmen angibt, der/das die Art des Versiegelungsfehlers unterscheidet.

7. Prüfvorrichtung (1) nach einem der Ansprüche 1 bis 6,
wobei die Wellenlänge des von der Lichtemissionseinheit (31) emittierten Lichts und die Wellenlänge der von der Lichtempfangseinheit (32) empfangenen Wärmestrahlung voneinander verschieden sind.

8. Prüfverfahren, Folgendes umfassend:
Emittieren von Licht durch eine Lichtemissionseinheit (31) zu einem Versiegelungsabschnitt (52) einer Verpackung (51), die ein lichtenergieabsorbierendes Material einschließt, wobei das Licht eine Wellenlänge aufweist, die von dem lichtabsorbierenden Material absorbiert wird;
Empfangen von Wärmestrahlung von dem Versiegelungsabschnitt (52) durch eine Lichtempfangseinheit (32) als thermische Informationen;
Erfassen der thermischen Informationen auf dem Versiegelungsabschnitt (52) als ein zweidimensionales Bild auf der Grundlage der Lichtempfangseinheit (32);
Bestimmen, ob der Versiegelungsabschnitt (52) in Ordnung oder fehlerhaft ist, auf der Grundlage des erfassten zweidimensionalen Bildes; und
Unterscheiden einer Art des Versiegelungsfehlers von anderen Arten von Versiegelungsfehlern, die zuvor in mehreren Bildverarbeitungsalgorithmen festgelegt werden, als Reaktion auf eine Bestimmung, dass der Versiegelungsabschnitt (32) fehlerhaft ist.

## Revendications

1. Appareil d'inspection (1) comprenant :
une unité d'émission de lumière (31) configurée pour émettre de la lumière vers une partie d'étanchéité (52) d'un emballage (51) contenant un matériau absorbant une énergie lumineuse, la lumière ayant une longueur d'onde pouvant être absorbée par le matériau absorbant de l'énergie lumineuse (51),
une unité de réception de lumière (32) configurée pour recevoir un rayonnement thermique de la partie d'étanchéité (52) sous forme d'informations thermiques,
un dispositif de commande (4) incluant plusieurs algorithmes de traitement d'image, le dispositif de commande (4) étant configuré pour :
acquérir les informations thermiques sur la partie d'étanchéité (52) de l'unité de réception de lumière (32) sous forme d'image bidimensionnelle,
déterminer si la partie d'étanchéité (32) est acceptée ou refusée sur la base de l'image bidimensionnelle acquise, et
distinguer un type d'un défaut d'étanchéité parmi d'autres types de défaut d'étanchéité préalablement définis dans les plusieurs algorithmes de traitement d'image en réponse à une détermination que la partie d'étanchéité (32) est refusée.

2. Appareil d'inspection (1) selon la revendication 1,
dans lequel dispositif de commande (4) est configuré en outre pour générer plusieurs ensembles de données d'image bidimensionnelle utilisés pour les plusieurs algorithmes de traitement d'image, et
les plusieurs algorithmes de traitement d'image distinguent le type du défaut d'étanchéité d'autres types de défauts d'étanchéité sur la base des plusieurs ensembles de données d'image bidimensionnelle.

3. Appareil d'inspection (1) selon la revendication 2,
dans lequel le dispositif de commande (4) est configuré en outre pour :
commander l'unité d'émission de lumière (31) pour émettre de la lumière,
commander l'unité de réception de lumière (32) pour recevoir un rayonnement thermique sous forme d'informations thermiques dans les mêmes conditions, et
générer les plusieurs ensembles de données d'image bidimensionnelle sur la base des informations thermiques acquises.

4. Appareil d'inspection (1) selon la revendication 2,
dans lequel le dispositif de commande (4) est configuré en outre pour :
commander l'unité d'émission de lumière (31) pour émettre la lumière,
commander l'unité de réception de lumière (32) pour recevoir le rayonnement thermique à différents moments en rapport à la lumière émise pour acquérir les informations thermiques, et
générer les plusieurs ensembles de données d'image bidimensionnelle sur la base des informations thermiques acquises.

5. Appareil d'inspection (1) selon la revendication 2,
dans lequel le dispositif de commande (4) est configuré en outre pour :
commander l'unité d'émission de lumière (31) pour émettre la lumière dans différentes conditions d'émission de lumière, et
commander l'unité de réception de lumière (32) pour recevoir le rayonnement thermique dans différentes conditions de réception de lumière pour acquérir les informations thermiques, et
générer les plusieurs ensembles de données d'image bidimensionnelle sur la base des informations thermiques acquises, dans lequel
les conditions sont des changement de valeurs de consigne de logiciel ou de circuits.

6. Appareil d'inspection (1) selon l'une quelconque des revendications 1 à 5, comprenant en outre un dispositif d'affichage,
dans lequel l'unité de distinction de défaut (403) affiche sur le dispositif d'affichage :
un résultat d'une détermination du défaut d'étanchéité,
le type du défaut d'étanchéité, et
un nom ou un symbole indiquant les plusieurs algorithmes de traitement d'image qui distingue le type de défaut d'étanchéité.

7. Appareil d'inspection (1) selon l'une quelconque des revendications 1 à 6,
dans lequel la longueur d'onde de la lumière émise par l'unité d'émission de lumière (31) et la longueur d'onde du rayonnement thermique reçu par l'unité de réception de lumière (32) sont différentes l'une de l'autre.

8. Procédé d'inspection comprenant :
l'émission d'une lumière par une unité d'émission de lumière (31) sur une partie d'étanchéité (52) d'un emballage (51) incluant un matériau absorbant une énergie lumineuse, la lumière ayant une longueur d'onde absorbée par le matériau absorbant de l'énergie lumineuse,
la réception d'un rayonnement thermique à partir de la partie d'étanchéité (52) par une unité de réception de lumière (32) sous forme d'informations thermiques,
l'acquisition des informations thermiques sur la partie d'étanchéité (52) sous forme d'une image bidimensionnelle sur la base de l'unité de réception de lumière (32),
la détermination si la partie d'étanchéité (52) est acceptée ou refusée sur la base de l'image bidimensionnelle acquise, et
la distinction d'un type d'un défaut d'étanchéité par rapport à d'autres types de défauts d'étanchéité préalablement définis dans plusieurs algorithmes de traitement d'image en réponse à une détermination que la partie d'étanchéité (32) est refusée.
